# EUROPEAN PATENT APPLICATION

(11) **EP 3 428 462 A1**
(43) Date of publication of application: **16.01.2019**
(21) Application number: 17762822.9
(22) Date of filing: 14.02.2017
(51) Int. Cl.: F16B 5/08, B23K 11/11, B23K 11/20, B32B 15/08, B32B 15/18, B32B 15/20, B62D 29/04, F16B 5/04, B21D 39/00, B21D 39/02, B21D 53/88, B21J 15/00

(54) **DIFFERENT-MATERIAL PANEL STRUCTURE**

(30) Priority: 08.03.2016 JP 2016044222
(71) Applicant: Kabushiki Kaisha Kobe Seiko Sho (Kobe Steel, Ltd.), Kobe-shi, Hyogo 651-8585 (JP)
(72) Inventor: IWASE Tetsu, Kanagawa 251-8551 (JP); IMAMURA Yoshihaya, Kanagawa 251-8551 (JP)
(74) Representative: Müller-Boré & Partner Patentanwälte PartG mbB
(86) International application number: PCT/JP2017/005241
(87) International publication number: WO 2017/154479

(57) **Abstract**

An outer panel of a different-material panel structure has a hem part in which a peripheral edge part of an inner panel is held via a resin layer on a folded part formed in the peripheral edge part. A rivet has a shaft part passing through the outer panel, and a rivet shaft recess is formed in the tip of the shaft part. An inner protrusion is provided in the inner panel, and the inner protrusion is disposed in the rivet shaft recess. A fused nugget is formed in the location where the rivet shaft recess and the tip of the inner protrusion come into contact, and a first heat-insulating part including at least the resin layer is formed in the gap formed with the resin layer in between the inner protrusion and the outer panel.

## Description

### Technical Field

The present invention relates to a different-material panel structure.

### Background Art

There have been demands for reducing the weight of vehicle bodies in order to improve running performance, operability, or fuel efficiency of vehicles such as automobiles. In order to address this, materials having small specific gravities such as, for example, aluminum alloys are started to be used for a variety of components of automobiles instead of previous steel materials. For example, panel structures of automobiles such as hoods (bonnets), doors, and luggage compartments are hollow structures that include an outer panel (outer plate) and an inner panel (inner plate), and use of aluminum alloy materials as the materials of these panels are discussed.

In this case, both the outer panel and the inner panel can be changed to aluminum alloy plates. Instead, a different-material panel structure can be used. For the different-material panel structure, raw materials according to required characteristics for these panels are combined with each other. Specifically, it is thought that the outer panel for which a design property, weight reduction, an impact energy absorbing property, and so forth are required is formed of an aluminum alloy plate, and the inner panel having a complex shape and a large forming depth is formed of a steel plate having a good formability.

Examples of a method of producing the different-material panel structure using the outer panel formed of an aluminum alloy and the inner panel formed of a steel plate include, for example, a method of integrating the outer panel and the inner panel with each other by hemming in which a peripheral edge part of the outer panel is folded back so as to hold thereinside a peripheral edge part of a flange of the inner panel. With this method, typically, an adhesive layer (resin layer) that also serves as an insulating layer for preventing galvanic corrosion is formed of a thermosetting resin such as epoxy resin, polyester resin, or phenol resin between the outer panel and the inner panel.

In this case, welding is performed with a resin adhesive layer or resin adhesive tape interposed between the outer panel and the inner panel. However, even when any one of welding methods including TIG welding, MIG welding, laser welding, and a spot welding is used, a brittle intermetallic compound (for example, Al₂Fe₅, which is an intermetallic compound of aluminum and iron) is produced at a joint interface of a weld zone. Thus, a sufficient joint strength is not necessarily obtainable.

Accordingly, in order to increase joint strength between an aluminum alloy plate and a steel plate, a method has been proposed in which the steel plate and a steel rivet driven through the aluminum alloy plate are spot welded to each other (see PTL 1). Furthermore, in order to prevent an influence of heat from a fused nugget during spot welding, a method has been proposed in which a raised part that protrudes toward the outer plate side is provided in an inner plate (see PTL 2). Furthermore, a method has been proposed in which hemming is performed on an inner plate where a raised part (or a protrusion) is provided (see PTL 3).

### Citation List

### Patent Literature

PTL 1: Japanese Unexamined Patent Application Publication No. 2015-164840
PTL 2: Japanese Unexamined Patent Application Publication No. 56-80380
PTL 3: Japanese Unexamined Patent Application Publication No. 2008-229697

### Summary of Invention

### Technical Problem

When the rivet is used to join the outer panel (aluminum alloy plate) to the inner panel (steel plate) as with the method described in PTL 1, a brittle intermetallic compound such as Al₂Fe₅ is not produced in a joining part because both the rivet and the inner panel are steel.

However, when this method is used for hemming performed on the outer panel, a bulging part may be produced in the outer panel due to heat transferred from the fused nugget generated at the tip of the rivet by spot welding, significantly degrading the appearance of a panel product.

In order to address this, the method as described in PTL 2 is effective. In this method, the protrusion (raised part) protruding toward the outer panel side is provided in the inner panel and a space inside the protrusion is used to prevent the transfer of heat.

However, with such a protrusion, hemming becomes difficult. That is, since there is a difference in deforming state between a position where the protrusion is provided and another position, preliminary work such as forming of a folded part on the outer panel side is required.

Furthermore, from the viewpoint of the design property of the outer panel, it is preferable that the radius of curvature of a hem bent part be small. However, with the protrusion provided in the inner panel, it is impossible to reduce the radius of curvature of the hem bent part.

Accordingly, an object of the present invention is to provide a different-material panel structure in which an outer panel formed of an aluminum plate or an aluminum alloy plate and an inner panel formed of a steel plate are firmly joined to each other, and the radius of curvature of a hem bent part of the outer panel is smaller than that of the related art.

### Solution to Problem

The present invention has the following configuration.

A different-material panel structure includes an outer panel, an inner panel, and a rivet. The outer panel is formed of an aluminum plate or an aluminum alloy plate. The inner panel is disposed so as to face the outer panel and formed of a steel plate. The rivet has a head part and a shaft part and is formed of steel.

The outer panel has a hem part having a hem bent part formed by folding a peripheral edge part and a folded back part extending from the hem bent part to a peripheral edge of the outer panel.

A peripheral edge part of the inner panel is held on an inner surface of the hem part with a resin layer interposed therebetween.

The head part of the rivet is secured to the outer panel, and the shaft part of the rivet penetrates through the outer panel from an outer surface of the folded back part of the outer panel toward the inner panel.

A rivet shaft recess recessed toward the head part is formed at a central part of a tip of the shaft part of the rivet.

The inner panel has an inner protrusion that protrudes toward the rivet side at a position facing the rivet.

The inner protrusion is disposed in the rivet shaft recess, and a fused nugget is formed at a location where a central part of the rivet shaft recess and a tip of the inner protrusion are in contact with each other.

A first heat-insulating part including at least the resin layer out of the resin layer and a gap is formed between the inner protrusion and the outer panel.

In the above-described different-material panel structure, a second heat-insulating part including at least the resin layer out of the resin layer and a gap may be formed between the rivet shaft recess and the inner protrusion.

Furthermore, at least one of the head part and the shaft part of the rivet may be clinched to the outer panel.

### Advantageous Effects of Invention

According to the present invention, the different-material panel structure can be obtained in which the outer panel formed of an aluminum plate or an aluminum alloy plate and the inner panel formed of a steel plate are firmly joined to each other, and the radius of curvature of the hem bent part of the outer panel is smaller than that of the related art.

### Brief Description of Drawings

[Fig. 1] Fig. 1 is a sectional view of the structure of a hem part of a different-material panel structure according to the present invention.
[Fig. 2] Fig. 2 is a sectional view illustrating a contact state between a rivet and an inner panel of the different-material panel structure illustrated in Fig. 1.
[Fig. 3A] Fig. 3A is a sectional view of the hem part illustrated in Fig. 1 immediately after hemming.
[Fig. 3B] Fig. 3B is a sectional view of a hem part as a reference example.
[Fig. 4A] Fig. 4A is a sectional view illustrating an example of the shape of a protrusion of the inner panel.
[Fig. 4B] Fig. 4B is a sectional view illustrating an example of the other shape of the protrusion of the inner panel.
[Fig. 5A] Fig. 5A is a sectional view illustrating another example of a configuration of the rivet.
[Fig. 5B] Fig. 5B is a sectional view illustrating yet another example the configuration of the rivet.
[Fig. 5C] Fig. 5C is a sectional view illustrating yet another example of the configuration of the rivet.
[Fig. 6] Fig. 6 is a perspective view illustrating an example of a method of spot welding for the rivet and the inner panel.

### Description of Embodiments

An embodiment of the present invention will be described in detail below with reference to the drawings.

### <Structure of a Different-material Panel Structure>

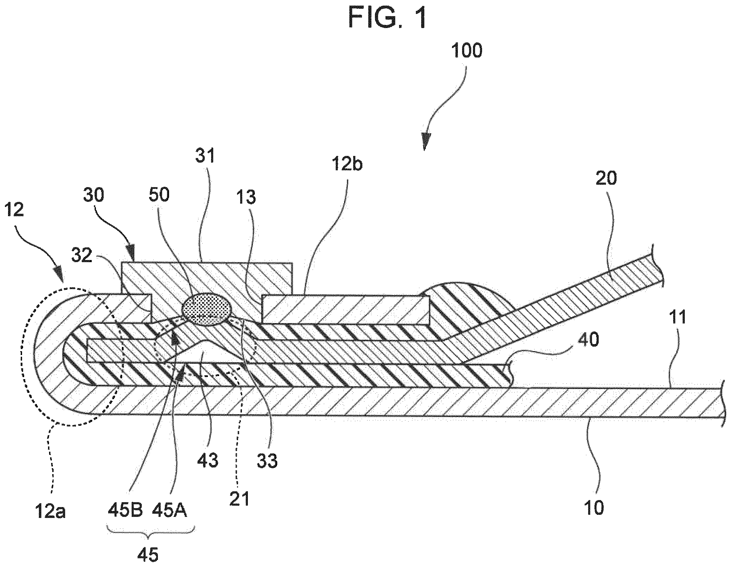

Fig. 1 is a sectional view of the structure of a hem part of a different-material panel structure.

A different-material panel structure 100 according to the present configuration includes an outer panel 10, an inner panel 20, and rivets 30. The outer panel 10 is formed of an aluminum plate or an aluminum alloy plate. The inner panel 20 is formed of a steel plate and disposed so as to face the outer panel 10. Each of the rivets 30 is formed of a steel material and includes a head part 31 and a shaft part 32. The outer panel 10 has a hem part 12 at a peripheral edge part thereof. A peripheral edge part of the inner panel 20 is held on an inner surface of the hem part 12 with a resin layer 40 interposed therebetween. The hem part 12 includes a hem bent part 12a and a folded back part 12b. The hem bent part 12a is formed by folding the peripheral edge part of the outer panel 10. The folded back part 12b extends from the hem bent part 12a to a peripheral end edge of the outer panel 10. The hem part 12 may be formed at part of the peripheral edge part of the outer panel 10 or throughout the entirety of the circumference of the peripheral edge part of the outer panel 10.

The rivets 30 are provided at a plurality of positions along the hem part 12 of the outer panel 10. The shaft part 32 of each of the rivets 30 protrudes from the folded back part 12b toward the inner panel 20. The head part 31 of the rivet 30 is clinched so as to be secured to the outer panel 10. Furthermore, the shaft part 32 of the rivet 30 penetrates through the folded back part 12b of the hem part 12.

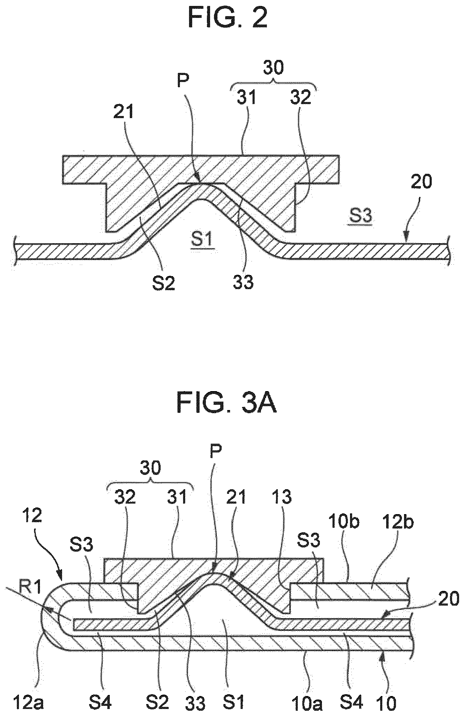

Fig. 2 is a sectional view illustrating a contact state between the rivet 30 and the inner panel 20 of the different-material panel structure illustrated in Fig. 1.

Each of the rivets 30 has a rivet shaft recess 33 at a central part of the tip of the shaft part 32 thereof. The rivet shaft recess 33 is recessed toward the head part 31 side. Meanwhile, the inner panel 20 has inner protrusions 21 that protrude toward the rivet 30 side at positions facing the rivets 30. Each of the inner protrusions 21 is disposed in a corresponding one of the rivet shaft recesses 33.

Furthermore, as illustrated in Fig. 1, a fused nugget 50 is formed at a location P where a central part (deepest part) of the rivet shaft recess 33 and the tip of the inner protrusion 21 are in contact with each other.

Fig. 3A is a sectional view of the hem part 12 when the rivet 30 and the inner panel 20 illustrated in Fig. 2 are joined to the outer panel 10.

A cavity S1 is formed between a surface of the inner protrusion 21 on the opposite side to the rivet 30 and the outer panel 10 facing this surface. Furthermore, a cavity S2 is formed between the rivet shaft recess 33 and the inner protrusion 21. This cavity S2 is formed due to the fact that an inclination of the inner protrusions 21 is steeper than an inclination of the rivet shaft recess 33. Furthermore, cavities S3 and S4 are formed between the inner panel 20 and the outer panel 10 in a region around the shaft part 32 of the rivet 30.

Heat-insulating parts that include the resin layer 40 or the resin layer 40 and a gap are formed in the cavities S1 and S2. For example, in the case illustrated in Fig. 1, a first heat-insulating part 45A including the resin layer 40 and a gap 43 is formed in the cavity S1 illustrated in Fig. 3A, and a second heat-insulating part 45B including the resin layer 40 is formed in the cavity S2 illustrated in Fig. 3A. Although it is not illustrated, the entirety of the cavity S1 may be filled with the resin layer 40.

Furthermore, in the cavity S2 between the rivet shaft recess 33 and the inner protrusion 21 illustrated in Fig. 2, the resin layer 40 is disposed as illustrated in Fig. 1 or, although it is not illustrated, a gap is formed in part of the cavity S2 because the resin does not flow. Thus, the second heat-insulating part 45B between the rivet shaft recess 33 and the inner protrusion 21 is formed by the resin layer 40 or resin layer 40 and the gap.

That is, the heat-insulating parts 45 that include the first heat-insulating part 45A and the second heat-insulating part 45B each include at least the resin layer 40 out of the resin layer 40 and the gap and has a joining function and a heat insulating function between the outer panel 10 and the inner panel 20.

Furthermore, the resin layer 40 is formed between the cavities S3 and S4, thereby the outer panel 10 is joined to the inner panel 20.

A riveting procedure for the different-material panel structure 100 having the above-described configuration is as follows.

First, a resin adhesive or a resin sealant is applied to the peripheral edge part of the outer panel 10 so as to provide an adhesive layer, or resin adhesive tape is pasted on the peripheral edge part of the outer panel 10. Next, each of the rivets 30 are driven into the peripheral edge part of the outer panel 10. Then, the peripheral edge part of the outer panel 10 where the rivets 30 are attached and the peripheral edge part of the inner panel 20 are combined and subjected to hem bending. The resin layer 40 and the gap 43 are formed in the above-described cavity S1 and the resin layer 40 is formed in the cavity S2 by this hem bending.

Next, the central part (deepest part) of each of the rivet shaft recesses 33 and the tip of a corresponding one of the inner protrusions 21 are spot welded to one another while the central parts and the tips are in contact with one another. Thus, the fused nuggets 50 are formed between the rivet shaft recesses 33 and the inner protrusions 21, thereby the outer panel 10 and the inner panel 20 are joined to each other by using the rivets 30.

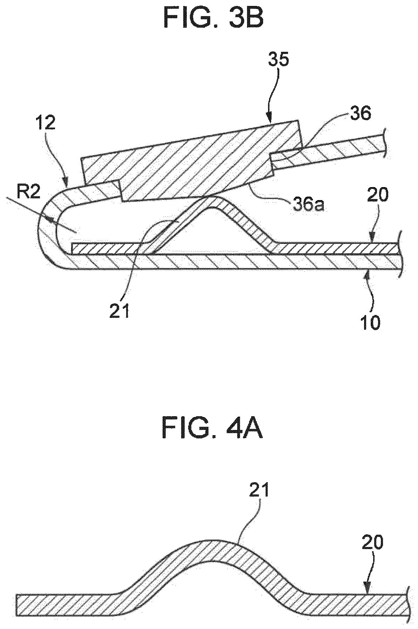

With the different-material panel structure 100 fastened in the above-described procedure, the inner protrusion 21 of the inner panel 20 is inserted into the rivet shaft recess 33 at the tip of the shaft part of the rivet 30. Thus, as illustrated in Fig. 3A, even when the inner protrusion 21 protrudes toward the rivet 30 side, this protruding part of the inner protrusion 21 is accommodated in the rivet shaft recess 33. This allows a radius of curvature Ri of the hem bent part 12a of the outer panel 10 to be reduced. In contrast, as illustrated in a reference drawing of Fig. 3B, with a typical rivet having no recess at the tip of the shaft part 32 of the rivet 30, an end surface 36a of a shaft part 36 of a rivet 35 and the inner protrusion 21 interfere with each other when the outer panel 10 is folded. Thus, a radius of curvature R₂ of the hem bent part 12a where the outer panel 10 is folded cannot be reduced.

In the example illustrated in Fig. 3A, a hemming is performed with such a large curvature (1/R₁) that a main surface 10a to become the outer side of the outer panel 10 and a rear surface 10b being an inverted surface of the main surface 10a and to become the folded back part 12b are parallel to each other. Thus, the hem part 12 that has a good design property with a flat folded back part 12b can be obtained. In contrast, with the different-material panel structure using a typical rivet, as illustrated in Fig. 3B, the curvature (1/R₂) for bending is insufficient, and accordingly, joint strength cannot be increased and the design property of the hem part 12 cannot be improved.

Furthermore, with the different-material panel structure 100 according to the present configuration, heat transfer from the fused nugget 50 to the outer panel 10 is suppressed by the first heat-insulating part formed in the cavity S1 between the inner protrusion 21 and the outer panel 10 and the second heat-insulating part formed between the rivet shaft recess 33 and the inner protrusion 21. Thus, an influence of heat propagating from the fused nugget 50 to the outer panel 10 is reduced. This prevents a bulging part from being produced due to heat in the main surface 10a of the outer panel 10. That is, with the present configuration, the peripheral edge part of the outer panel 10 can be bent with a large curvature. In addition, the high-quality hem part 12 having a good design property can be obtained.

Furthermore, with the present configuration, as illustrated in Fig. 3A, the tip part of the inner protrusion 21 and the deepest part of the rivet shaft recess 33 are in contact with each other. Thus, the welding current can be caused to flow through the contact part of both the parts in a concentrated manner. As a result, the fused nugget 50 can be formed at a location near the head part 31 of the rivet 30. Thus, the fused nugget 50 can be formed at a location separated from the outer panel 10 as much as possible. Accordingly, the influence of heat from the fused nugget 50 on the outer panel 10 can be suppressed.

Together with the heat transfer suppressing effect of the first heat-insulating part 45A formed between the inner protrusion 21 and the outer panel 10, the second heat-insulating part 45B further suppresses the heat transfer from the fused nugget 50 to the outer panel 10.

In a portion where the fused nugget 50 is formed, both the inner panel 20 and the rivet 30 are formed of steel. Thus, a brittle intermetallic compound is not produced at a joint between the inner panel 20 and the rivet 30, and accordingly, high joint strength can be obtained for a long time.

The different-material panel structure 100 according to the present configuration is preferably applicable to a variety of members of an automobile body such as, in addition to a hood (bonnet), a luggage compartment and a door panel. The stereoscopic shape and the planar shape of the different-material panel structure 100 and an extent to which the hemming is performed in the different-material panel structure 100 vary in accordance with application of a panel.

Next, specific configurations of the parts of the different-material panel structure 100 having the above-described configuration will be described in detail below.

### <The Outer Panel>

The outer panel 10 is a flat plate-shaped member curved entirely in a three-dimensional arc shape toward the outside of a vehicle body. The outer panel 10 is obtained by forming an aluminum plate or an aluminum alloy plate into a specified shape by a variety of forming methods including pressing.

The aluminum alloy plate used for the outer panel 10 can be appropriately selected in accordance with required characteristics of the vehicle body structure to which the outer panel 10 is applied such as strength, formability, and corrosion resistance. For example, an aluminum alloy of 3000 series, 5000, series, 6000 series, 7000 series, or the like specified in the JIS standard (JIS H 0001:1998) or the AA standard can be used. In order to reduce the weight of the vehicle body of an automobile or the like, it is preferable that, from the viewpoint of reducing the thickness, an aluminum alloy having a high strength and a good formability be used for the outer panel 10.

Specifically, it is preferable that the aluminum alloy be a 6000 series hypersilicon aluminum alloy such as, for example, 6N01, 6016, 6111, or 6022 which contains excessive Si relative to Mg and the ratio of silicon to magnesium (= Si/Mg) in the composition of which is 1 or larger. The characteristic (BH characteristic, bake hardenability) of these 6000 series aluminum alloys is as follows: strength (proof stress) is reduced so as to maintain the formability during the formation of the outer panel 10; and, in a coating and baking process performed after the formation of the outer panel 10, strength (proof stress) is increased due to age hardening by an artificial aging treatment at a low temperature of 150 to 180°C for a short period of time of about 10 to 50 minutes.

The above-described aluminum alloy material undergoes a solution treatment and a quenching treatment (temper designation T4) after undergoing cold rolling or hot extrusion. After that, the aluminum alloy material undergoes processing including pressing, thereby being processed into a specified shape. In this way, a pressed raw material of the outer panel 10 is obtained. Furthermore, after the pressing, the pressed raw material is assembled into the vehicle body and undergoes, for example, an aging treatment (temper designation T6 or the like) or an over-aging treatment (temper designation T7) by bake coating.

The thickness (plate thickness) of the aluminum alloy plate for the outer panel 10 is appropriately selected typically from a range from 0.5 to 3 mm for consideration of a balance between the required characteristics for the outer panel 10 such as weight reduction, strength, stiffness, and formability of the automobile body. Here, when the thickness of the aluminum alloy plate is excessively small, the strength or stiffness required for members of the automobile is not necessarily ensured. In contrast, when the thickness of the aluminum alloy plate is excessively large, the weight of the automobile body cannot be reduced, and the hemming becomes difficult.

### <The Inner Panel>

The inner panel 20 is a member having a hat-shaped sectional shape and is obtained by forming, for example, a steel alloy plate such as an iron plate or a steel plate into a specified hat shape by using a variety of forming methods including pressing. Furthermore, the inner panel 20 has the hollow inner protrusion 21 formed at least a part thereof where the rivet 30 is disposed.

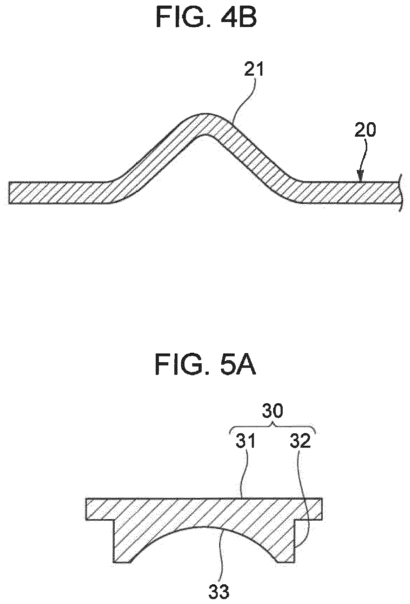

The external shape of the inner protrusion 21 is not particularly limited as long as the inner protrusion 21 is hollow and accommodated in the rivet shaft recess 33. For example, a dome shape (partially spherical shape) illustrated in Fig. 4A or a conical shape illustrated in Fig. 4B may be applied, and furthermore, any one of a variety of shapes such as a prismatic shape and bead shape may be applied.

Furthermore, the height of the inner protrusion 21 is not particularly limited and may be appropriately determined in accordance with a member to which the inner protrusion 21 is applied. For example, the height of the inner protrusion 21 is preferably O.lto 2.0 mm and more preferably 0.3 to 1.5 mm. With the inner protrusion 21 having a height in the above-described range, the first heat-insulating part 45A is formed between the inner protrusion 21 and the outer panel 10 and the second heat-insulating part 45B is formed between the rivet shaft recess 33 and the inner protrusion 21 as illustrated in Fig. 1. With these heat-insulating parts 45, propagation of the heat of the fused nugget 50 to the outer panel 10 during welding can be prevented. Furthermore, in the case of joining by spot welding, application of a pressing force to the outer panel 10 through electrodes can be prevented.

In contrast, the surface of the steel plate used for the inner panel 20 may be coated with a general-purpose zinc-based or aluminum-based coating layer by, for example, plating, or the steel plate may be bare. Although a cheap mild steel plate may be used as the steel plate for the different-material panel structure 100 according to the present configuration as is the case with the related-art steel inner panel, also, a cold rolled steel plate such as a high-tensile steel plate (HT) or a stainless steel plate may be applied.

Furthermore, the thickness (plate thickness) of the steel plate for the inner panel 20 is appropriately selected from a range from 0.3 to 3 mm for consideration of a balance between the required characteristics for the inner panel 20 such as weight reduction, strength, stiffness, and formability of the automobile body. However, when the thickness of the steel plate is excessively small, strength or stiffness required for members of the automobile is not necessarily ensured. Furthermore, when the thickness of the steel plate is excessively large, weight reduction of the automobile body becomes difficult.

### <The Hem Part>

The hem part 12 is formed by hem bending (folding) the peripheral edge part of the outer panel 10. The inner panel 20 is connected to this hem part 12 of the outer panel 10 with a resin layer 40 interposed therebetween. A hem shape of the hem part 12 can be either a flat hem or a roped hem. The example of the hem part 12 illustrated in Figs. 1 and 3A has a hem shape of the flat hem that can be formed by folding with a die or processing with a roller.

### <The Rivet>

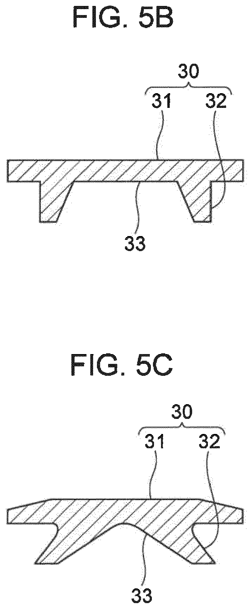

Figs. 5A to 5C are sectional views illustrating structural examples of the rivet 30. The shape of the rivet shaft recess 33 is not particularly limited. It is sufficient that the rivet shaft recess 33 have the shape that can accommodate the inner protrusion 21. Any one of a variety of shapes such as, for example, a dome shape (Fig. 5A), a frusto-conical shape (Fig. 5B), and a conical shape (Fig. 5C) can be selected. Furthermore, the shapes and the sizes of the head part 31 and the shaft part 32 of the rivet 30 can be appropriately selected in accordance with application or a method.

In the case where welding is performed by spot welding, it is preferable that a film formed of a material having high electric resistivity (hereafter, referred to as "high resistance") compared to that of the material (steel) of the inner panel 20 be provided at a part of the rivet 30 to be in contact with the outer panel 10. Providing such a film having high resistance can prevent reduction of the current at a weld zone caused by diversion of the welding current to the outer panel 10 during the spot welding.

Specific examples of the high-resistance film provided on the rivet 30 include, for example, a film containing a metal having comparatively high resistivity such as zinc, lead, or aluminum, a film containing synthetic resin such as polyester-based resin or silicone-based resin, an iron oxide film (mill scale), and an electroless Ni-P plating film. The high-resistance film provided on the rivet 30 may be an insulating film formed by using a commercially available surface treatment agent such as Disgo (registered trademark), Geomet (registered trademark), or Lafre (registered trademark).

Furthermore, it is preferable that either or both of the head part 31 and the shaft part 32 of the rivet 30 be clinched to the outer panel 10. Clinching the rivet 30 to the outer panel 10 can prevent removal of the rivet 30 before the welding. Furthermore, even when the resin layer 40 deteriorates with time after the welding has been performed, a minimum joint strength between the rivet 30 and the outer panel 10 can be maintained.

Clinching may be performed by driving the rivet 30 into the outer panel 10 so as to cause a plastic flow of the outer panel 10 to the head part 31 of the rivet 30 or by preparing a pilot hole in the outer panel 10 and causing a plastic flow of the outer panel 10 to the head part 31 of the rivet 30.

### <The Resin Layer>

As illustrated in Fig. 1, in the different-material panel structure 100 according to the present embodiment, the resin layer 40 is provided between the outer panel 10 and the inner panel 20 at the hem part 12. Folding back of the peripheral edge part of the outer panel 10 is performed so as to hold thereinside the peripheral edge part of a flange of the inner panel 20 with the resin layer 40 interposed therebetween for integration. Thus, the peripheral edge part of the outer panel 10 and the peripheral edge part of the flange of the inner panel 20 are combined with each other with the resin layer 40 interposed therebetween so as to form the hem part 12 having a layered structure and so as to be integrated as the different-material panel structure 100.

In order to form the resin layer 40, when performing the hemming (flat hemming), a resin adhesive or a resin sealant made of, for example, thermosetting resin or thermoplastic resin can be applied to or resin adhesive tape can be pasted on a region inside the peripheral edge part of the outer panel 10 facing the peripheral edge part of the flange of the inner panel 20 before folding back the peripheral edge part of the outer panel 10 so as to hold the peripheral edge part of the flange of the inner panel 20 inside the peripheral edge part of the outer panel 10 to be folded. The resin layer 40 prevents galvanic corrosion caused due to direct contact between aluminum and iron and increases joint strength between different materials (different-material panel structure). Accordingly, it is preferable that the resin layer 40 be applied to or provided throughout the entirety of the peripheral edge part of the outer panel 10 (so as to surround the peripheral edge part of the outer panel 10). As the adhesive, the tape, or the sealer that forms the resin layer 40, for example, epoxy resin, polyester resin, or phenol resin is appropriately used.

### <A Method of Welding>

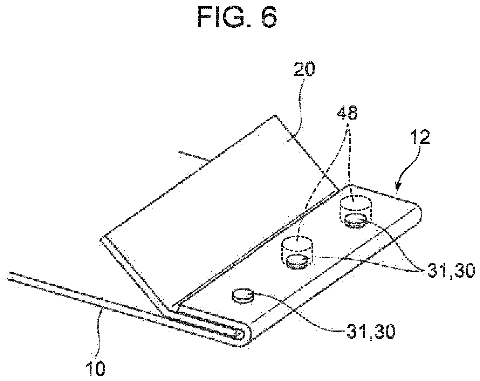

The rivets 30 and the inner panel 20 are joined to one another by spot welding. The spot welding may be direct spot welding performed by disposing a weld zone between electrodes and causing the current to flow in the plate thickness direction or may be indirect spot welding performed by disposing a plurality of electrodes 48 only on the head part 31 side of the rivets 30 as illustrated in Fig. 6 and causing the current to flow between the electrodes 48 through the inner panel 20 being an object of the welding.

When performing spot welding, in order to ensure the surface smoothness of the outer panel 10, it is preferable that a plate be brought into contact with the outer panel 10 side during the welding. In so doing, it is preferable that the plate to be used be a panel or a block member that is formed of a material having high heat conductivity such as a steel plate or that has a channel through which refrigerant flows.

When performing laser welding, the rivets 30 may be joined to the inner panel being the object of the welding by radiating a laser beam from the head parts 31 of the rivets 30 so as to form fusion zones through the rivets 30.

When welding each of the rivets 30 and the inner panel 20 to each other, the high-temperature fused nugget 50 is formed at a contact part between the rivet 30 and the inner panel 20. However, in the different-material panel structure 100 according to the present configuration, at a joining part between the inner panel 20 and the outer panel 10, the cavities S1 and S2 are formed due to the inner protrusion 21. As a result, the first heat-insulating part 45Ais formed in the cavity S1, which is on the rear side of the inner protrusion 21, between the inner protrusion 21 and the outer panel 10. Furthermore, the second heat-insulating part 45B is formed in the cavity S2 between the inner protrusion 21 and the rivet shaft recess 33. This prevents or significantly reduces heat transfer to the outer panel 10 during spot welding. As a result, softening of the outer panel 10 is reduced, thereby suppressing bulging out of the outer panel 10 due squeezing of the tip of the rivet 30. Thus, an automobile panel the appearance of which has a good design property can be produced.

As has been described, the present description discloses the following.
(1) A different-material panel structure includes an outer panel, an inner panel, and a rivet. The outer panel is formed of an aluminum plate or an aluminum alloy plate. The inner panel is disposed so as to face the outer panel and formed of a steel plate. The rivet has a head part and a shaft part and is formed of steel.
   The outer panel has a hem part having a hem bent part formed by folding a peripheral edge part and a folded back part extending from the hem bent part to a peripheral edge of the outer panel.
   A peripheral edge part of the inner panel is held on an inner surface of the hem part with a resin layer interposed therebetween.
   The head part of the rivet is secured to the outer panel, and the shaft part of the rivet penetrates through the outer panel from an outer surface of the folded back part of the outer panel toward the inner panel.
   A rivet shaft recess recessed toward the head part is formed at a central part of a tip of the shaft part of the rivet.
   The inner panel has an inner protrusion that protrudes toward the rivet side at a position facing the rivet.
   The inner protrusion is disposed in the rivet shaft recess, and a fused nugget is formed at a location where a central part of the rivet shaft recess and a tip of the inner protrusion are in contact with each other.
   A first heat-insulating part including at least the resin layer out of the resin layer and a gap is formed between the inner protrusion and the outer panel.
   In the different-material panel structure having the above-described configuration, the recess is provided at the tip of the shaft part of the rivet, and the protrusion of the inner panel 20 is accommodated in the recess. Thus, the influence of heat due to the fused nugget can be suppressed, and the radius of curvature of the hem bent part can be reduced. Accordingly, compared to the case where a typical rivet without a part (recess) able to accommodate the protrusion of the inner panel is used, bending with a large curvature is possible, and the hem part having a good design property can be obtained.
(2) In the different-material panel structure of (1), a second heat-insulating part including at least the resin layer out of the resin layer and a gap is formed between the rivet shaft recess and the inner protrusion.
   In the different-material panel structure having the above-described configuration, the second heat-insulating part is formed between the recess of the rivet and the protrusion of the inner panel. Together with the heat transfer suppressing effect of the first heat-insulating part formed between the outer panel and the protrusion of the inner panel, the second heat-insulating part allows the influence of the heat due to the fused nugget to be efficiently suppressed.
(3) In the different-material panel structure described in (1) or (2), at least one of the head part and the shaft part of the rivet is clinched to the outer panel.

In the different-material panel structure having the above-described configuration, removal of the rivet from the outer panel before welding can be prevented. Furthermore, an influence of deterioration of the resin layer with time after the welding is eliminated. Thus, a minimum joint strength between the rivet and the outer panel can be maintained.

The present application is based on a Japanese patent application (Japanese Patent Application No. 2016-44222) filed on March 8, 2016, the entire contents of which are incorporated herein by reference.

### Reference Signs List

- 10: outer panel
- 12: hem part
- 12a: hem bent part
- 12b: folded back part
- 20: inner panel
- 21: inner protrusion
- 30: rivet
- 31: head part
- 32: shaft part
- 33: rivet shaft recess
- 40: resin layer
- 45A: first heat-insulating part
- 45B: second heat-insulating part
- 45: heat-insulating part
- 50: fused nugget
- 100: different-material panel structure

## Claims

1. A different-material panel structure comprising:
an outer panel formed of an aluminum plate or an aluminum alloy plate;
an inner panel that is disposed so as to face the outer panel and that is formed of a steel plate; and
a rivet that has a head part and a shaft part and that is formed of steel,
wherein the outer panel has a hem part having a hem bent part formed by folding a peripheral edge part and a folded back part extending from the hem bent part to a peripheral edge of the outer panel,
wherein a peripheral edge part of the inner panel is held on an inner surface of the hem part with a resin layer interposed therebetween,
wherein the head part of the rivet is secured to the outer panel, and the shaft part of the rivet penetrates through the outer panel from an outer surface of the folded back part of the outer panel toward the inner panel,
wherein a rivet shaft recess recessed toward the head part is formed at a central part of a tip of the shaft part of the rivet,
wherein the inner panel has an inner protrusion that protrudes toward the rivet side at a position facing the rivet,
wherein the inner protrusion is disposed in the rivet shaft recess, and a fused nugget is formed at a location where a central part of the rivet shaft recess and a tip of the inner protrusion are in contact with each other, and
wherein a first heat-insulating part including at least the resin layer out of the resin layer and a gap is formed between the inner protrusion and the outer panel.

2. The different-material panel structure according to Claim 1,
wherein a second heat-insulating part including at least the resin layer out of the resin layer and a gap is formed between the rivet shaft recess and the inner protrusion.

3. The different-material panel structure according to Claim 1 or 2,
wherein at least one of the head part and the shaft part of the rivet is clinched to the outer panel.
